Europäisches Patentamt

European Patent Office

Office européen des brevets

(11) Publication number: **0 052 481**
**B1**

# EUROPEAN PATENT SPECIFICATION

(45) Date of publication of patent specification: **27.07.88**

(51) Int. Cl.⁴: **G 06 F 11/20**

(21) Application number: **81305362.6**

(22) Date of filing: **12.11.81**

(54) Semiconductor device having a device state identifying circuit.

(30) Priority: **13.11.80 JP 159871/80**

(43) Date of publication of application:
**26.05.82 Bulletin 82/21**

(45) Publication of the grant of the patent:
**27.07.88 Bulletin 88/30**

(84) Designated Contracting States:
**DE FR GB NL**

(56) References cited:
**FR-A-2 405 537**
**US-A-3 860 831**
**US-A-4 014 007**
**US-A-4 055 802**

(73) Proprietor: **FUJITSU LIMITED**
**1015, Kamikodanaka Nakahara-ku**
**Kawasaki-shi Kanagawa 211 (JP)**

(72) Inventor: **Baba, Fumio 48-303, Miyamaedaira**
**Green Hights**
**430, Mukogaoka Takatsu-ku**
**Kawasaki-shi Kanagawa 213 (JP)**

(74) Representative: **Sunderland, James Harry et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to a semiconductor device, and more particularly, to a semiconductor device incorporating means for identifying the state of the device.

For example, in a semiconductor memory device, a large number of memory cells are arranged along rows and columns which are orthogonal to each other. A density of defects generated in such a semiconductor memory device during the manufacture thereof is relatively independent of the integration density of the device, but is dependent on semiconductor manufacturing technology. Therefore, the higher the integration density of the device, the greater the ratio of the number of normal memory cells to that of defective memory cells. This is one of the advantages obtained by increasing the integration density of a semiconductor memory device. However, even if the device includes only one defective memory cell, the device cannot be operated normally and, therefore, the device must be abandoned.

In order to be able to operate a semiconductor memory device despite such a defective memory cell, a semiconductor memory device has been known in which a redundancy memory cell array is incorporated with a main memory cell matrix along rows or columns thereof. In this device, when a defective memory cell is detected, the redundancy memory cell array is used instead of a row memory cell array or a column memory cell array which includes a defective memory cell. Therefore, in a semiconductor memory device incorporating a redundancy memory cell array therein, the manufacturing yield thereof can be improved.

In such a semiconductor memory device incorporating a redundancy memory cell array, from the view-point of quality control, it is important to know whether or not the redundancy memory cell array is used. One approach is to provide a bit ROM of a fuse type which serves as a flag register. If the redundancy memory cell array is used, "0" is written into the ROM, while, if the redundancy memory cell array is not used, "1" is written into the ROM. However, in order to read information stored in the ROM, terminals therefore must be provided in the device, so that the device becomes large.

It should be noted that such information stored in the ROM is rarely read out; that is, the information is read out only during the check mode.

Therefore, it is a principal object of the present invention to provide a semiconductor device incorporating means for identifying the state of the device, for example, for identifying whether or not a redundancy memory cell array is used, without having terminals that are used exclusively for that purpose.

US—A—4 055 802 discloses the provision, in an integrated circuit comprising a ROM unit, of an identification network. The network is configured (its connection pattern is such as to be) a unique identifier of the memory format established in the ROM unit. When interrogation signals are applied, the network provides voltages representative of its circuit configuration and hence of the memory format of the ROM unit. For this purpose ground signals are applied to a ground lead and to an input power supply lead and the voltages representative of the circuit configuration of the array are read out from input conductors.

These input conductors are the address input lines of the ROM unit and the ground and input power supply leads are those of the ROM unit.

The read out voltages take different levels, for example, either −0.7V of −1.4V, depending upon the circuit configuration of the array. During actual operation of the ROM unit the identification network is in effect disconnected.

In the identification network each input conductor (address input line) is linked, through a diode, either to the ground lead or through a transistor/resistor/diode arrangement to the input power supply lead. The arrangement of the links establishes the configuration of the network.

When the input power supply lead is brought to ground (during interrogation of the network) and current forced to flow into the network from the input conductors, the voltages on the input conductors indicate the configuration of the network.

According to the present invention, there is provided a semiconductor device comprising external terminals, three of which are connected to an identifying circuit, inside said device, for identifying the state of said device by monitoring the signals on said three terminals, said identifying circuit including a ROM element and a switching element, said switching element being either in a normal mode or in a check mode, whereby in the normal mode the information in said ROM element does not affect the signals on said three terminals, and whereby in the check mode the potential on at least one of the terminals is changed, said identifying circuit being constructed in such a way that the information stored in said ROM element is read out during the check-mode by detecting the conductance between a first and a second terminal of said three terminals, when the potentials of said first and second terminals are at different and low levels and when the potential of the third terminal is at a high level, said switching element being connected to said three terminals and allowing said ROM element to be connected to said first and second terminals if said third terminal is at a high level.

The present invention will be more clearly understood from the following description with reference to the accompanying drawings, wherein:

Fig. 1 is a block circuit diagram illustrating an embodiment of the semiconductor device according to the present invention;

Fig. 2 is a block circuit diagram of the state identifying circuit 11 of Fig. 1;

Fig. 3 is a modification of Fig. 2;

Fig. 4 is another modification of Fig. 2;

Fig. 5 is a circuit diagram of the ROM element 12 of Figs. 2, 3 and 4; and

Fig. 6 is circuit diagram of the switching circuit 13-1 or 13-2 of Figs. 2, 3 and 4.

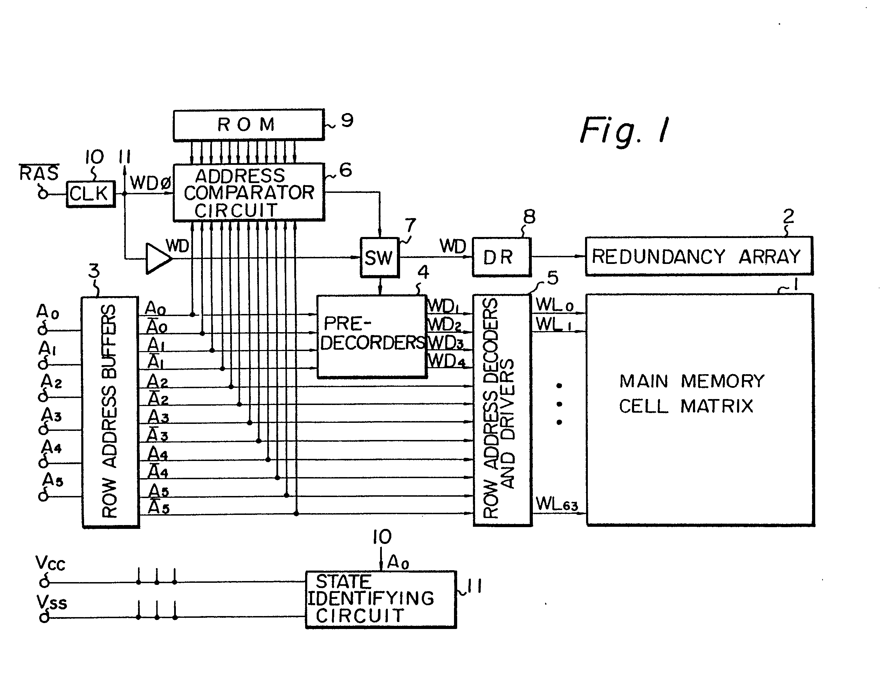

In Fig. 1, which illustrates an embodiment of the semiconductor device according to the present invention, 1 is a main memory matrix which is, for example, 4096 $(=2^{12})$ dynamic or static MOS memory cells; 2 is a redundancy memory cell array incorporated with the main memory cell matrix 1 along rows thereof; 3 is row address buffers for converting address signals $A_0(=2^0)$, $A_1(=2^1)$, ..., $A_5(=2^5)$ of a TTL level into address signals $A_0$, $A_1$, ..., $A_5$ of a MOS level and their inverted signals $\overline{A}_0$, $\overline{A}_1$, ..., $\overline{A}_5$ which are supplied to pre-decoders 4 and row address decoders and drivers 5 for selecting one row memory cell array within the main memory cell matrix 1. In addition, the address signals $A_0$, $\overline{A}_0$, $A_1$, $\overline{A}_1$, ..., $A_5$, $\overline{A}_5$ are also supplied to an address comparator circuit 6 for selecting the redundancy memory cell array 2 via a switch 7 and a driver 8.

If a defective memory cell is detected in the main memory cell matrix 1, a row address to which the defective memory cell belongs is written into a ROM 9. As a result, the address comparator circuit 6 compares the address signals $A_0$, $\overline{A}_0$, $A_1$, $\overline{A}_1$, ..., $A_5$, $\overline{A}_5$ from the row address buffers 3 with the defective row address stored in the ROM 9. If the address signals $A_0$, $\overline{A}_0$, $A_1$, $\overline{A}_1$, ..., $A_5$, $\overline{A}_5$ do not correspond to the defective row address, the address comparator circuit 6 activates the switch 7 so as to supply a clock signal WD to the pre-decoders 4. As a result, the pre-decoder 4 generate clock signals $WD_1$, $WD_2$, $WD_3$ and $WD_4$ so as to select one submatrix within the memory cell matrix 1. Further, the row address decoders and drivers 5 select one row memory cell array within each submatrix. Contrary to this, when the address signals $A_0$, $\overline{A}_0$, $A_1$, $\overline{A}_1$, ..., $A_5$, $\overline{A}_5$ correspond to the defective row address, the address comparator circuit 6 activates the switch 7 so as to supply the clock signal WD to the driver 8. As a result, the redundancy memory cell array 2 is selected and, accordingly, any of the memory cells of the array can be selected. On the other hand, the predecoders can not perform a selection operation even when the pre-decoders 4 receive the address signals $A_0$, $\overline{A}_0$, $A_1$ and $\overline{A}_1$ from the row address buffers 3.

Note that the address comparator circuit 6 is activated by a clock signal WDφ generated from a clock 10 which, in turn, receives a row address strobe signal RAS. In addition, the device of Fig. 1 comprises column address buffers, column address decoders and drivers, sense amplifiers and the like which are, however, omitted in Fig. 1.

According to the present invention, a state identifying circuit 11 is provided so as to identify a state of the device of Fig. 1. In this case, the state identifying circuit 11 stores information as to whether or not the redundancy memory cell array is used; that is, whether or not a defective memory cell is detected in the main memory cell matrix 1. As is understood from Fig. 1, the state identifying circuit 11 does not require any additional terminals. Note that the power supply terminals $V_{cc}$ and $V_{ss}$ are not used exclusively for the state identifying circuit 11.

Next, the state identifying circuit 11 will be explained. The state identifying circuit 11 according to the present invention comprises a ROM element and one or two switching circuits. In general, there are various types of ROMs; that is, a fuse-type ROM, a transistor-type ROM, a FAMOS-type ROM and the like. Any type of a bit ROM serves as a two-terminal element. Therefore, the presence and absence of conductance between the two terminals of the ROM represents information "0" and "1", respectively.

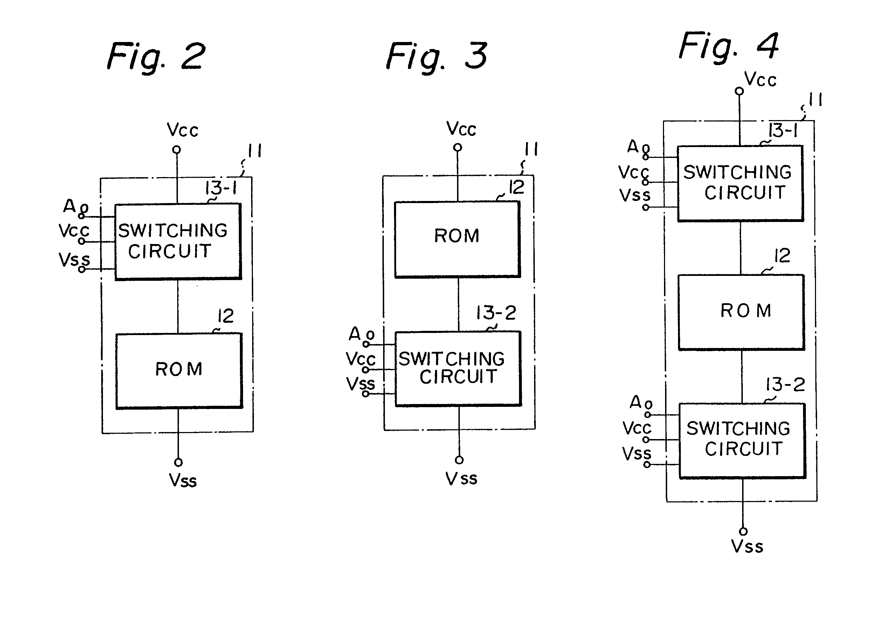

There are three types of the state identifying circuit 11. In the first type as illustrated in Fig. 2, one terminal of a ROM element 12 is connected via a switching circuit 13-1 to an external terminal such as the power supply terminal $V_{cc}$, while the other terminal of the ROM element 12 is connected directly to another external terminal such as the power supply terminal $V_{ss}$. In the second type as illustrated in Fig. 3, one terminal of the ROM element 12 is connected directly to the power supply terminal $V_{cc}$, while the other terminal of the ROM element 12 is connected via a switching circuit 13-2 to the power supply terminal $V_{ss}$. In the third type as illustrated in Fig. 4, one terminal of the ROM element 12 is connected via the switching circuit 13-1 to the power supply terminal $V_{cc}$, while the other terminal of the ROM element 12 is connected via the switching circuit 13-2 to the power supply terminal $V_{ss}$.

In any type of state identifying circuit 11, when the switching circuit 13-1 (or 13-2) is in an off-state, the ROM element 12 is in a floating state, so that information stored in the ROM element 12 can not be read out at the power supply terminals $V_{cc}$ and $V_{ss}$. Contrary to this, when the switching circuit 13-1 (or 13-2) is in an on-state, the ROM element 12 is connected to the power supply terminals $V_{cc}$ and $V_{ss}$, so that information stored in the ROM element 12 can be read out at the power supply terminals $V_{cc}$ and $V_{ss}$. That is, the presence or absence of conductance between the power supply terminals $V_{cc}$ and $V_{ss}$ can be detected.

Note that the potentials of the power supply terminals $V_{cc}$ and $V_{ss}$ are, for example, about 5 and 0 volts, respectively, during the normal mode. In addition, it should be noted that the circuit of Fig. 2, 3 or 4 can be connected between two other external terminals at least one of which is used for an external clock.

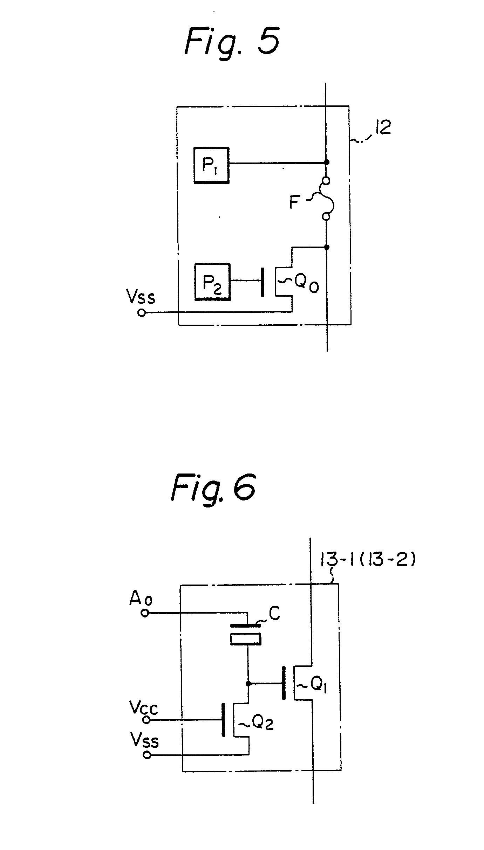

Fig. 5 is a circuit diagram of the ROM element 12 of Figs. 2, 3 and 4. As illustrated in Fig. 5, the ROM element 12 is of a fuse type which comprises a fuse F, a MOS transistor $Q_0$ and two pads $P_1$ and $P_2$. In the ROM element 12, the presence and absence of the fuse F correspond to information "0" and "1", respectively. That is, a relatively high voltage is applied to the pads $P_1$ and $P_2$ and the power supply terminal $V_{ss}$ is

5

0 052 481

6

grounded, so that the fuse F is melted and, accordingly, the information "1" is written into the ROM element 12. Note that the terminal of the transistor $Q_0$ can be connected to an external terminal other than the power supply terminal $V_{ss}$.

Fig. 6 is a circuit diagram of the switching circuit 13-1 or 13-2 of Figs. 2, 3 and 4. As illustrated in Fig. 6, the switching circuit 13-1 (13-2) comprises two MOS transistors $Q_1$ and $Q_2$, and a MOS capacitor C. A terminal of the capacitor C is connected to an external terminal which is, for example, the terminal $A_0$. During the normal mode, since the potential of each of the power supply terminals $V_{cc}$ and $V_{ss}$ are 5 and 0 volts, respectively, the transistor $Q_2$ is turned on and, accordingly, the transistor $Q_1$ is turned off, regardless of the potential level of the terminal $A_0$. In other words, the switching circuit 13-1 (13-2) is in an off-state. Therefore, the information stored in the ROM element 12 in Fig. 2, 3 or 4 can not be read out. Contrary to this, during the check mode, since the potential of the power supply terminal $V_{cc}$ is at a low level, that is, 0.1 to 0.2 volts (in this case, the potential of the power supply terminal $V_{ss}$ is zero), the transistor $Q_3$ is turned off and accordingly, the transistor $Q_1$ is turned on when the potential of the terminal $A_0$ is high. In this state, in Fig. 2, 3 or 4, if the ROM element 12 is in a conducting state, a current flows therethrough. However, if the ROM element 12 is in a nonconducting state, no current flows therethrough. As a result, the information stored in the ROM element 12 is read out at the power supply terminals $V_{cc}$ and $V_{ss}$ by detecting the presence or absence of a current therethrough.

The power supply terminals $V_{cc}$ and $V_{ss}$ are common to internal circuits other than the state identifying circuit 11 in the semiconductor device of Fig. 1. Therefore, even when the potential of the power supply terminal $V_{cc}$ is low so that the internal circuits can not be operated, leak currents flow therethrough. Therefore, it may be difficult to determine whether or not the information "1" is written into the ROM element 12 of Fig. 2, 3 or 4. In this case, it is preferable to use a pulsating signal or an AC signal as the terminal $A_0$. As a result, when the information "0" is written into the ROM element 12, that is, the ROM element 12 is in a conducting state, the current flowing through the power supply terminals $V_{cc}$ and $V_{ss}$ changes in response to the frequency of the terminal $A_0$. Therefore, the information stored in the ROM element 12 can be easily read.

Note that, the transistors $Q_0$, $Q_1$ and $Q_2$ of Figs. 6, 6A and 6B can be of a bipolar type instead of a MOS type. In addition, in Fig. 2, 3 or 4, a bit ROM element 12 is shown; however, a ROM for a plurality of bits can be provided. In this case, one or two switching circuits are connected to each bit.

As explained hereinbefore, the semiconductor device according to the present invention has an advantage in that the state of the device stored in a ROM element can be identified without having external terminals used exclusively for the ROM element. In addition, during the normal mode, the ROM element is in a floating state, which causes no effect in the normal operation of the semiconductor device.

Thus, the presence or absence, or occurrence or non-occurrence of a state, condition, characteristic, attribute or defect, for example, of a semiconductor device embodying the present invention can be identified by reading out identification data held in the device through terminals used also for other purposes.

## Claims

1. A semiconductor device comprising external terminals, three ($V_{ss}$, $V_{cc}$, $A_0$) of which are connected to an identifying circuit (11), inside said device, for identifying the state of said device by monitoring the signals on said three terminals, said identifying circuit including a ROM element (12) and a switching element (13-1, 13-2), said switching element (13-1, 13-2) being either in a normal mode or in a check mode, whereby in the normal mode the information in said ROM element (12) does not affect the signals on said three terminals, and whereby in the check mode the potential on at least one of the terminals ($V_{cc}$) is changed, said identifying circuit (11) being constructed in such a way that the information stored in said ROM element (12) is read out during the check-mode by detecting the conductance between a first ($V_{cc}$) and a second ($V_{ss}$) terminal of said three terminals, when the potentials of said first and second terminals are at different and low levels and when the potential of the third terminal ($A_0$) is at a high level, said switching element (13-1, 13-2) being connected to said three terminals and allowing said ROM element to be connected to said first ($V_{ss}$) and second ($V_{cc}$) terminals if said third terminal ($A_0$) is at a high level.

2. A device as set forth in claim 1, wherein said ROM element (12) is connected to said second external terminal ($V_{ss}$), and the switching element (13-1) is connected to the ROM element and to said first, second and third external terminals and is operable to connect the ROM element (12) to said first external terminal ($V_{cc}$) when the potentials of said first ($V_{cc}$) and second ($V_{ss}$) external terminals are at different low levels and when the potential of said third ($A_0$) external terminal is at a high level.

3. A device as set forth in claim 1, wherein said ROM element (12) is connected to said first external terminal ($V_{cc}$) and the switching element (13-2) is connected to the ROM element and to said first, second and third external terminals and is operable to connect the ROM element (12) to the second external terminal ($V_{ss}$) when the potentials of said first ($V_{cc}$) and second ($V_{ss}$) external terminals are at different low levels and when the potential of said third ($A_0$) external terminal is at a high level.

4. A device as set forth in claim 1, wherein the said switching element (13-1) is connected to said ROM element (12) and to said first, second and third external terminals and is operable to connect the ROM element (12) to said first external terminal ($V_{cc}$) when the potentials of said first ($V_{cc}$) and second ($V_{ss}$) external terminals are at different low levels and when the potential of said third ($A_0$) external terminal is at a high level;

and wherein the identifying circuit (11) comprises a further switching element (13-2) connected to said ROM element (12) and to said first, second and third external terminals and operable to connect the ROM element (12) to said second external terminal ($V_{ss}$) when the potentials of said first ($V_{cc}$) and second ($V_{ss}$) external terminals are at different low levels and when the potential of said third ($A_0$) external terminal is at a high level.

5. A device as set forth in claim 2, 3 or 4, wherein said ROM element (12) is of a fuse type.

6. A device as set forth in claim 1, 2, 3, 4 or 5, wherein the or each switching element (13-1, 13-2) comprises:

a first transistor (Q1), having a drain and a source connected respectively to the first external terminal ($V_{cc}$) and said ROM element (12) or connected respectively to said ROM element (12) and the second external terminal ($V_{ss}$), as the case may be, and having a gate;

a capacitor (C) having a first electrode connected to said third external terminal ($A_0$) and a second electrode connected to the gate of said first transistor (Q1); and

a second transistor (Q2) having a drain connected to the gate of said first transistor (Q1), a source connected to said second external terminal ($V_{ss}$) and a gate connected to said first external terminal ($V_{cc}$).

7. A device as set forth in claim 1, wherein said first ($V_{cc}$) and second ($V_{ss}$) external terminals are used for power supplies.

8. A device as set forth in claim 1, wherein at least one of said first and second external terminals is used for an external clock.

9. A device as set forth in claim 1, further comprising:

memory cells arranged in rows and columns orthogonal to each other;

at least one redundancy memory cell array incorporated with said memory cells along rows or columns thereof; and

wherein said identifying circuit stores information as to whether or not said redundancy memory cell array is used instead of a memory cell array including at least one defective memory cell.

**Patentansprüche**

1. Halbleitervorrichtung mit externen Anschlüssen, von denen drei ($V_{ss}$, $V_{cc}$, $A_0$) innerhalb der genannten Vorrichtung, mit einer Identifizierungsschaltung (11) verbunden sind, um den Zustand der genannten Vorrichtung durch überwachung der Signale aus den genannten drei Anschlüssen zu identifizieren, wobei die genannte Identifizierungseinrichtung ein ROM-Element (12) und ein Schaltelement (13-1, 13-2) umfaßt, welches genannte Schaltelement (13-1, 13-2) entweder in einem normalen Modus oder in einem Prüfmodus ist, wodurch in dem normalen Modus die Information in dem genannten ROM-Element (12) nicht die Signale auf den genannten drei Anschlüssen beeinflußt, und wodurch im Prüfmodus das Potential auf wenigstens einem der Anschlüsse ($V_{cc}$) geändert wird, die genannte Identifizierungsschaltung (11) auf solch eine Weise aufgebaut ist, daß die in dem genannten ROM-Element (12) gespeicherte Information während des Prüfmodus durch Detektieren der Konduktanz zwischen einem ersten ($V_{cc}$) und zweiten ($V_{ss}$) Anschluß der genannten drei Anschlüsse ausgelesen wird, wenn die Potentiale der ersten und zweiten Anschlüsse auf verschiedenen und niedrigen Pegeln sind und wenn das Potential des dritten Anschlusses ($A_0$) auf einem hohen Pegel ist, die Schaltelemente (13-1, 13-2) mit den genannten drei Anschlüssen verbunden werden und erlauben, daß das genannte ROM-Element mit den genannten ersten ($V_{ss}$) und zweiten ($V_{cc}$) Anschlüssen verbunden wird, falls der genannte dritte Anschluß ($A_0$) auf einem hohen Pegel ist.

2. Vorrichtung nach Anspruch 1, bei der das genannte ROM-Element (12) mit dem genannten zweiten externen Anschluß ($V_{ss}$) verbunden ist, und das Schaltelement (13-1) mit dem ROM-Element und den genannten ersten, zweiten und dritten externen Anschlüssen verbunden ist und betreibbar ist, um das ROM-Element (12) mit dem genannten ersten externen Anschluß ($V_{cc}$) zu verbinden, wenn die Potentiale der genannten ersten ($V_{cc}$) und zweiten ($V_{ss}$) externen Anschlüsse auf verschiedenen neidrigen Pegeln sind und wenn das Potential des genannten dritten ($A_0$) externen Anschlusses auf einem hohen Pegel ist.

3. Vorrichtung nach Anspruch 1, bei der das genannte ROM-Element (12) mit dem genannten ersten externen Anschluß ($V_{cc}$) und das Schaltelement (13-2) mit dem ROM-Element und den genannten ersten, zweiten und dritten externen Anschlüssen verbunden ist und betreibbar ist, um das ROM-Element (12) mit dem zweiten externen Anschluß ($V_{ss}$) zu verbinden, wenn die Potentiale der genannten ersten ($V_{cc}$) und zweiten ($V_{ss}$) externen Anschlüsse auf verschiedenen niedrigen Pegeln sind und wenn das Potential des genannten dritten ($A_0$) externen Anschlusses auf einem hohen Pegel ist.

4. Vorrichtung nach Anspruch 1, bei der das genannte Schaltelement (13-1) mit dem genannten ROM-Element (12) und mit den genannten ersten, zweiten und dritten externen Anschlüssen verbunden und betreibbar ist, um das ROM-Element (12) mit dem genannten ersten externen Anschluß ($V_{cc}$) zu verbinden, wenn die Potentiale des genannten ersten ($V_{cc}$) und zweiten ($V_{ss}$) externen Anschlüsse auf verschiedenen niedrigen Pegeln sind und wenn das Potential des genannten dritten ($A_0$) externen Anschlusses auf einem hohen Pegel ist;

und bei der die Identifizierungsschaltung (11) ein weiteres Schaltelement (13-2) umfaßt, welches mit dem genannten ROM-Element (12) und mit den genannten ersten, zweiten und dritten Anschlüssen verbunden ist und betreibbar ist, um das ROM-Element (12) mit dem genannten zweiten externen Anschluß ($V_{ss}$) zu verbinden, wenn die Potentiale der genannten ersten ($V_{cc}$) und zweiten ($V_{ss}$) externen Anschlüsse auf verschiedenen niedrigen Pegeln sind und wenn das Potential des genannten dritten ($A_0$) externen Anschlusses auf einem hohen Pegel ist.

5. Vorrichtung nach einem der Ansprüche 2, 3 oder 4, bei der das genannte ROM-Element vom Schmelz-Typ ist.

6. Vorrichtung nach einem der Ansprüche 2, 3, 4 oder 5, bei der das oder jedes Schaltelement (13-1, 13-2) umfaßt;

einen ersten Transistor ($Q1$), der ein Drain und eine Source hat, die mit dem ersten externen Anschluß ($V_{cc}$) bzw. dem genannten ROM-Element (12) oder mit dem genannten ROM-Element (12) bzw. den zweiten externen Anschluß ($V_{ss}$), wie immer es der Fall sein mag, verbunden sind und ein Gate hat;

einen Kondensator ($C$), der eine erste Elektrode hat, die mit dem genannten dritten externen Anschluß ($A_0$) verbunden ist, und eine zweite Elektrode, die mit dem Gate des genannten ersten Transistors ($Q1$) verbunden ist; und

einem zweiten Transistor ($Q2$), der ein Drain hat, das mit dem Gate des genannten ersten Transistors ($Q1$) verbunden ist, eine Source, die mit dem genannten zweiten externen Anschluß ($V_{ss}$) verbunden ist, und ein Gate, das mit dem genannten ersten externen Anschluß ($V_{cc}$) verbunden ist.

7. Vorrichtung nach Anspruch 1, bei der die genannten ersten ($V_{cc}$) und zweiten ($V_{ss}$) externen Anschlüsse als Energieversorgungen verwendet werden.

8. Vorrichtung nach Anspruch 1, bei der wenigstens einer vor den genannten ersten und zweiten externen Anschlüssen als ein externer Takt verwendet wird.

9. Vorrichtung nach Anspruch 1, ferner mit:

Speicherzellen, die in Reihen und Spalten rechtwinklig zueinander angeordnet sind;

wenigstens einem redundanten Speicherzellenarray, welches den genannten Speicherzellen längs Reihen oder Spalten derselben eingegliedert ist; und

bei der die genannte Identifizierungsschaltung Information darüber speichert, ob oder nicht das genannte redundante Speicherzellenarray anstelle eines Speicherzellenarray verwendet wird, welches wenigstens eine defekte Speicherzelle umfaßt.

**Revendications**

1. Dispositif à semiconducteur comprenant des bornes extérieures dont trois ($V_{ss}$, $V_{cc}$, $A_0$) sont connectées à un circuit d'identification (11), à l'intérieur du dispositif, destiné à identifier l'état du dispositif en contrôlant les signaux à ces trois bornes, le circuit d'identification incluant un élément de mémoire morte ROM (12) et un élément de commutation (13-1, 13-2), l'élément de commutation (13-1, 13-2) étant soit dans un mode normal, soit dans un mode de contrôle, l'information incluse dans l'élément de mémoire ROM (12) n'affectant pas de la sorte, dans le mode normal, les signaux aux trois bornes, et le potentiel à au moins une des bornes ($V_{cc}$) étant de la sorte changé, dans le mode de contrôle, le circuit d'identification (11) étant agencé de telle manière que l'information mémorisée dans l'élément de mémoire ROM (12) est lue pendant le mode de contrôle par la détection de la conductance entre une première ($V_{cc}$) et une deuxième ($V_{ss}$) borne de trois bornes, quand les potentiels des première et deuxième bornes sont à des niveaux différents et bas et quand le potentiel de la troisième borne ($A_0$) est à un niveau haut, l'élément de commutation (13-1, 13-2) étant connecté aux trois bornes et permettant de connecter l'élément de mémoire ROM aux première ($V_{ss}$) et deuxième ($V_{cc}$) bornes si la troisième borne ($A_0$) est à un niveau haut.

2. Dispositif selon la revendication 1, dans lequel l'élément de mémoire ROM (12) est connecté à la deuxième borne extérieure ($V_{ss}$), et l'élément de commutation (13-1) est connecté à l'élément de mémoire ROM et aux première, deuxième et troisième bornes extérieures et peut être mis en fonctionnement pour connecter l'élément de mémoire ROM (12) à la première borne extérieure ($V_{cc}$) quand les potentiels des première ($V_{cc}$) et deuxième ($V_{ss}$) bornes extérieures sont à différents niveaux bas et quand le potentiel de la troisième borne extérieure ($A_0$) est à un niveau haut.

3. Dispositif selon la revendication 1, dans lequel l'élément de mémoire ROM (12) est connecté à la première borne extérieure ($V_{cc}$) et l'élément de commutation (13-2) est connecté à l'élément de mémoire ROM et aux première, deuxième et troisième bornes extérieures et peut être mis en fonctionnement pour connecter l'élément de mémoire ROM (12) à la deuxième borne extérieure ($V_{ss}$) quand les potentiels des première ($V_{cc}$) et deuxième ($V_{ss}$) bornes extérieures sont à différents niveaux bas et quand le potentiel de la troisième borne extérieure ($A_0$) est à un niveau haut.

4. Dispositif selon la revendication 1, dans lequel l'élément de commutation (13-1) est connecté à l'élément de mémoire ROM (12) et aux première, deuxième et troisième bornes extérieures et peut être mis en fonctionnement pour connecter l'élément de mémoire ROM (12) à la première borne extérieure ($V_{cc}$) quand les potentiels des première ($V_{cc}$) et deuxième ($V_{ss}$) bornes extérieures sont à différents niveaux bas et quand le potentiel de la troisième borne extérieure ($A_0$) est à un niveau haut;

et dans lequel le circuit d'identification (11) comprend un autre élément de commutation (13-2) connecté à l'élément de mémoire ROM (12) et aux première, deuxième et troisième bornes extérieures et peut être mis en fonctionnement pour connecter l'élément de mémoire ROM (12) à la deuxième borne extérieure ($V_{ss}$) quand les potentiels des première ($V_{cc}$) et deuxième ($V_{ss}$) bornes extérieures sont à différents niveaux bas et quand le potentiel de la troisième borne extérieure ($A_0$) est à un niveau haut.

5. Dispositif selon l'une quelconque des revendication 2 à 4, dans lequel l'élément de mémoire ROM (12) est d'un type à fusibles.

6. Dispositif selon l'une quelconque des revendications 1 à 5, dans lequel le ou chaque élément de commutation (13-1, 13-2) comprend:

un premier transistor ($Q1$), comportant un drain et une source connectés respectivement à la première borne extérieure ($V_{cc}$) et à l'élément de mémoire ROM (12) ou connectés respectivement à l'élément de mémoire ROM (12) et à la deuxième borne extérieure ($V_{ss}$), selon le cas, et comportant une grille;

un condensateur (C) comportant une première électrode connectée à la troisième borne extérieure ($A_0$) et une seconde électrode connectée à la grille du premier transistor ($Q1$); et

un deuxième transistor ($Q2$) comportant un drain connecté à la grille du premier transistor ($Q1$), une source connectée à la deuxième borne extérieure ($V_{ss}$) et une grille connectée à la première borne extérieure ($V_{cc}$).

7. Dispositif selon la revendication 1, dans lequel les première ($V_{cc}$) et deuxième ($V_{ss}$) bornes extérieures sont utilisées pour des sources d'alimentation.

8. Dispositif selon la revendication 1, dans lequel au moins une des première et deuxième bornes extérieures est utilisée pour une horloge extérieure.

9. Dispositif selon la revendication 1, comprenant en outre:

des cellules de mémoire disposées en lignes et en colonnes perpendiculaires entre elles;

au moins une rangée de cellules de mémoire de redondance incorporée avec les cellules de mémoire le long des lignes ou des colonnes de celles-ci; et

dans lequel le circuit d'identification mémorise une information relative au fait que la rangée de cellules de mémoire de redondance est ou non utilisée à la place d'une rangée de cellules de mémoire incluant au moins une cellule de mémoire défectueuse.

Fig. 1

# Fig. 2

Vcc

A
Vcc
Vss

SWITCHING CIRCUIT    13-1

ROM    12

Vss

11

# Fig. 3

Vcc

ROM    12

A
Vcc
Vss

SWITCHING CIRCUIT    13-2

Vss

11

# Fig. 4

Vcc

A
Vcc
Vss

SWITCHING CIRCUIT    13-1

ROM    12

A
Vcc
Vss

SWITCHING CIRCUIT    13-2

Vss

11

0 052 481

## Fig. 5

## Fig. 6